# EUROPÄISCHE PATENTSCHRIFT

(11) **EP 0 464 360 B1**
(45) Veröffentlichungstag und Bekanntmachung des Hinweises auf die Patenterteilung: **30.11.1994**
(21) Anmeldenummer: 91108510.8
(22) Anmeldetag: 25.05.1991
(51) Int. Cl.: H02K 5/22, F04D 13/14, H01R 25/00

(54) **Anschlussstecker für Doppel-Kreiselpumpe**
Connecting plug for duplex centrifugal pump
Fiche de raccordement pour double pompe centrifuge

(30) Priorität: 06.07.1990 DE 4021411
(43) Veröffentlichungstag der Anmeldung: 08.01.1992
(73) Patentinhaber: WILO GmbH, D-44263 Dortmund (DE)
(72) Erfinder: Strelow, Günter, W-4630 Bochum (DE)
(74) Vertreter: COHAUSZ HASE DAWIDOWICZ & PARTNER

(56) Entgegenhaltungen:
- EP-A- 0 351 271
- DE-A- 2 951 002
- US-A- 4 477 136
- US-A- 4 487 467

## Beschreibung

Die Erfindung betrifft eine Doppel-Kreiselpumpe mit zwei außen am Pumpengehäuse vorstehenden, zueinander parallel angeordneten, in getrennten Motorengehäusen befindlichen Elektromotoren, die elektrisch angeschlossen sind.

Die EP-A-0 351 271 offenbart eine derartige Doppel-Kreiselpumpe.

Es ist bekannt, die Elektromotoren von Doppel-Kreiselpumpen elektrisch getrennt anzuschließen, wobei diese elektrischen Anschlußleitungen zu einem Steuergerät geführt sein können. Zu jeder Pumpe ist meist ein Kondensator und ein Umschalter oder Stufenschalter vorgesehen. Eine solche Konstruktion ist in Herstellung und Montage aufwendig.

Aufgabe der Erfindung ist es, eine Doppel-Kreiselpumpe so zu verbessern, daß die Elektromotoren auf konstruktiv einfache Weise angeschlossen und Herstellung und Montage erleichtert sind.

Diese Aufgabe wird erfindungsgemäß dadurch gelöst, daß an beiden Elektromotorengehäusen jeweils eine elektrische Anschlußstelle angeordnet ist, an der ein einziger Stecker befestigbar ist, die die elektrischen Kontakte beider Motorenanschlußstellen kontaktiert.

Ein solcher Stecker braucht nach der Montage der Pumpe nur einfach von außen auf die Stirnseiten der beiden Motoren mittig aufgedrückt zu werden, um die elektrischen Verbindungen für beide Motoren zu schaffen. Dies ist konstruktiv besonders einfach und für einen Monteur leicht zu handhaben. Vorzugsweise wird hierbei vorgeschlagen, daß jedes Gehäuse mindestens eine Ausnehmung insbesondere Öffnung und/oder mindestens einen Vorsprung aufweist, in die mindestens ein Vorsprung und/oder mindestens eine Ausnehmung insbesondere Öffnung des Steckers eingreift, bzw. übergreift.

Auch wird hierzu vorgeschlagen, daß der Stecker den Spalt zwischen beiden Motoren überbrückt. Ferner ist von Vorteil, wenn die Aufsteckrichtung achsparallel zu den Motorenachsen ist.

Vorzugzweise wird vorgeschlagen, daß der Stecker in zwei Stellungen aufsteckbar ist, die durch 180° Grad-Drehung des Steckers voneinander unterschiedlich sind. Dies läßt es zu, daß der Stecker in zwei Stellungen montierbar ist und damit die Anschlußleitung von dem Stecker aus zu der jeweils gewünschten Seite liegen kann. Alternativ kann dies aber auch dazu genutzt werden, daß in der ersten Steckerstellung andere Anschlußbedingungen bestehen als in der zweiten, d.h. es kann z.B. hierdurch die Spannung gewählt werden.

Besonders vorteilhaft ist es, wenn der Stecker mindestens einen (Um-)Schalter für beide Motoren aufweist. Ferner kann auch der Stecker einen Kondensator für beide Motoren besitzen, so daß ein Kondensator eingespart werden kann. Eine formschöne und platzsparende Bauweise wird erzielt, wenn der Kondensator am Stecker außen zum Pumpengehäuse hin vorsteht und im V-förmigen Zwischenraum zwischen den Motorengehäusen liegt. Von Vorteil ist es auch, wenn der Stecker mittig zu beiden Motorengehäusen aufgesteckt ist.

Ein Ausführungsbeispiel der Erfindung ist in den Zeichnungen dargestellt und wird im folgenden näher beschrieben. Es zeigen:

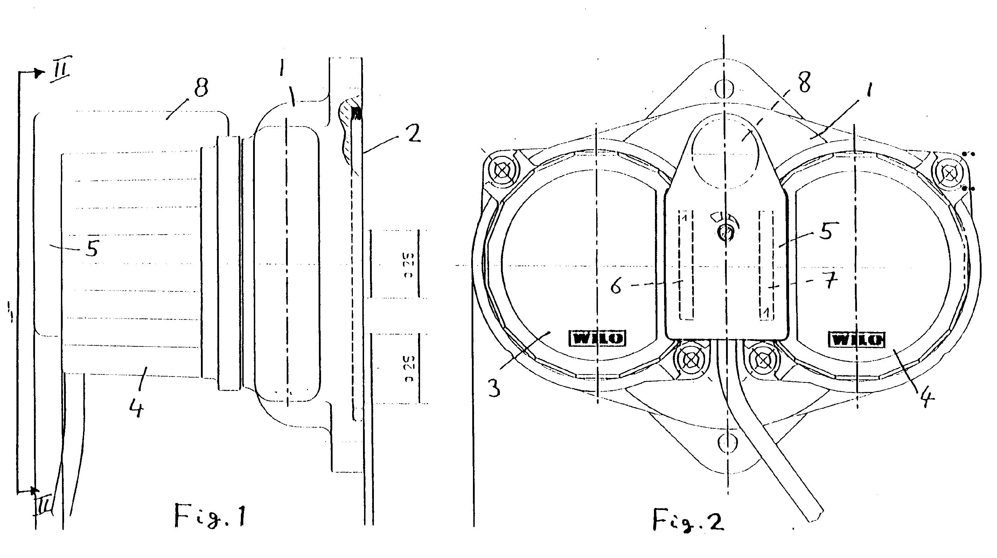

- Fig. 1: eine Seitenansicht der Doppelpumpe und
- Fig. 2: eine Ansicht nach II-II in Fig. 1

Die Doppelpumpe kann zwei Spaltrohrkreiselpumpen aufweisen, deren Pumpengehäuse 1 eine große ebene Seitenfläche 2 besitzt, mit der die Pumpe an einer Fläche einer Verbrauchsvorrichtung befestigbar ist. Am Gehäuse 1 sind die Gehäuse 3, 4 von zwei Elektromotoren befestigt, wobei Pumpengehäuse und Motorengehäuse einstückig geformt sein können.

Die Gehäuse 3, 4 beider Elektromotoren können zylindrisch sein, oder aber wie im Ausführungsbeispiel nach außen hin sich kegelstumpfförmig verjüngen, wobei die Achsen beider Motoren zueinander parallel liegen. Der Zwischenraum beider Motoren ist durch einen Stecker 5 überbrückt, der teilweise die Stirnseite beider Elektromotoren überdeckt und Steckerleisten oder Steckstifte auf der, der Motoren zugewandten Seite besitzt, mit denen der Stecker in Öffnungen beider Motorenstirnseiten hineinreicht, um beide Elektromotoren zu kontaktieren.

Da die Steckerleisten oder Steckervorsprünge 6, 7 sich parallel zu den Elektromotorenachsen erstrecken, kann der Stecker 5 in Achsrichtung auf die Pumpe aufgesteckt werden. In dem Fall, in dem die Vorsprünge oder Steckerleisten bzw. Stifte symetrisch angeordnet sind, kann der Stecker in zwei zueinander 180° Grad verschiedenen Drehstellungen auf die Pumpe aufgesteckt werden, um entweder hierdurch zu bestimmen in welche Richtung die Anschlußleitung abläuft, oder aber ob hierdurch die Motoren in unterschiedlichen Spannungen zu versorgen.

Der Stecker kann mindestens einen (Um-)Schalter für beide Motoren besitzen, so daß es sich erübrigt für jeden Elektromotor einen gesonderten Schalter vorzusehen. In gleicher Weise kann auch der Stecker einen einzigen Kondensator 8 aufweisen, der beide Motoren versorgt.

Eine besonders formschöne und platzsparende Bauweise wird erzielt, wenn der Kondensator 8 außen am Stecker zum Pumpengehäuse hin vorsteht und im V-förmigen Zwischraum zwischen den Motorengehäusen liegt.

## Patentansprüche

1. Doppel-Kreiselpumpe mit zwei außen am Pumpengehäuse (1) vorstehenden, zueinander parallel angeordneten, in getrennten Motorengehäuse (3,4) befindlichen Elektromotoren, die elektrisch angeschlossen sind, **dadurch gekennzeichnet,** daß an beiden Elektromotorengehäusen (3,4) jeweils eine elektrische Anschlußstelle angeordnet ist, an der ein einziger Stecker (5) befestigbar ist, der die elektrischen Kontakte beider Motorenanschlußstellen kontaktiert.

2. Doppel-Kreiselpumpe nach Anspruch 1, **dadurch gekennzeichnet,** daß jedes Gehäuse (3,4) mindestens eine Ausnehmung insbesondere Öffnung und/oder mindestens einen Vorsprung aufweist, in die mindestens ein Vorsprung (6,7) und/oder mindestens eine Ausnehmung insbesondere Öffnung des Steckers eingreift, bzw. übergreift.

3. Doppel-Kreiselpumpe nach Anspruch 1 oder 2. **dadurch gekennzeichnet,** daß der Stecker (5) den Spalt zwischen beiden Motoren (3,4) überbrückt.

4. Doppel-Kreiselpumpe nach einem der vorherigen Ansprüche, **dadurch gekennzeichnet,** daß die Aufsteckrichtung achsparallel zu den Motorenachsen ist.

5. Doppel-Kreiselpumpe nsch einem der vorherigen Ansprüche, **dadurch gekennzeichnet,** daß der Stecker (5) in zwei Stellungen aufsteckbar ist, die durch 180° Grad-Drehung des Steckers voneinander unterschiedlich sind.

6. Doppel-Kreiselpumpe nach einem der vorherigen Ansprüche, **dadurch gekennzeichnet,** daß der Stecker (5) mindestens einen (Um-)Schalter für beide Motoren aufweist.

7. Doppel-Kreiselpumpe nach einem der vorherigen Ansprüche, **dadurch gekennzeichnet,** daß der Stecker (5) einen Kondensator (8) für beide Motoren aufweist.

8. Doppel-Kreiselpumpe nach Anspruch 7, **dadurch gekennzeichnet,** daß der Kondensator (8) am Stecker (5) außen zum Pumpengehäuse hin vorsteht und im V-förmigen Zwischenraum zwischen den Motorengehäusen (3,4) liegt.

9. Doppel-Kreiselpumpe nach einem der vorherigen Ansprüche, **dadurch gekennzeichnet,** daß der Stecker (5) mittig zu beiden Motorengehäusen (3,4) aufgesteckt ist.

## Claims

1. Duplex centrifugal pump fitted with two electric motors located in separate motor casings (3,4) arranged parallel to each other and projecting outward from the pump housing (1), and provided with electrical connections, **characterized in that** on each of the two electric motor casings (3,4) is located one electrical connection point to which one single plug connector (5) can be attached, thus establishing the electrical contact for both the two motor connection points.

2. Duplex centrifugal pump according to Claim 1, **characterized in that** each housing (3,4) comprises at least one recess, more particularly opening, and/or at least one projection into which one projection (6,7) and/or at least one recess, more particularly opening, of the plug connector engages or slips over.

3. Duplex centrifugal pump according to Claim 1 or 2, **characterized in that** the plug connector (5) bridges the gap between the two motors (3, 4).

4. Duplex centrifugal pump according to any of the above Claims, **characterized in that** the plug-in direction is parallel to the axes of the motors.

5. Duplex centrifugal pump according to any of the above Claims, **characterized in that** the plug connector (5) may be plugged in in either of two different positions by rotating the plug connector through 180°.

6. Duplex centrifugal pump according to any of the above Claims, **characterized in that** the plug connector (5) comprises at least one (selector) switch for the two motors.

7. Duplex centrifugal pump according to any of the above Claims, **characterized in that** the plug connector (5) comprises one capacitor (8) for the two motors.

8. Duplex centrifugal pump according to Claim 7, **characterized in that** the capacitor (8) on the plug connector (5) projects outwards towards the pump housing and lies in the V-shaped space between the motor casings (3, 4).

9. Duplex centrifugal pump according to any of the above Claims, **characterized in that** the plug connector (5) is plugged in centrally to both motor casings (3,4).

## Revendications

1. Double pompe centrifuge avec deux moteurs électriques en saillie à l'extérieur du carter de pompe (1), disposés parallèles entre eux, se trouvant dans des carters de moteur (3, 4) séparés, qui sont raccordés électriquement,
caractérisée en ce que, sur les deux carters de moteur électrique (3, 4) est disposée respectivement une prise de courant électrique sur laquelle peut être fixée une fiche mâle (5) unique qui met en contact les contacts électriques des deux prises de courant de moteur.

2. Double pompe centrifuge selon la revendication 1,
caractérisée en ce que chaque carter (3, 4) présente au moins un évidement, en particulier une ouverture, et/ou au moins une saillie dans lequel vient en prise ou respectivement que recouvre au moins une saillie (6, 7) et/ou au moins un évidement, en particulier une ouverture, de la fiche mâle.

3. Double pompe centrifuge selon la revendication 1 ou 2,
caractérisée en ce que la fiche mâle (5) ponte la fente entre les deux moteurs (3, 4).

4. Double pompe centrifuge selon l'une des revendications précédentes,
caractérisée en ce que la direction d'enfichage est à axe parallèle aux axes des moteurs.

5. Double pompe centrifuge selon l'une des revendications précédentes,
caractérisée en ce que la fiche mâle (5) peut être enfoncée en deux positions qui diffèrent l'une de l'autre par une rotation de 180° de la fiche mâle.

6. Double pompe centrifuge selon l'une des revendications précédentes, caractérisée en ce que la fiche mâle (5) présente au moins un interrupteur (commutateur) pour les deux moteurs.

7. Double pompe centrifuge selon l'une des revendications précédentes,
caractérisée en ce que la fiche mâle (5) présente un condensateur (8) pour les deux moteurs.

8. Double pompe centrifuge selon la revendication 7, caractérisée en ce que le condensateur (8) fait saillie extérieurement sur la fiche mâle (5) par rapport au carter de pompe et se trouve dans l'espace intermédiaire en forme de V entre les carters de moteur (3, 4).

9. Double pompe centrifuge selon l'une des revendications précédentes,
caractérisée en ce que la fiche mâle (5) est enfichée centralement aux deux carters de moteur (3, 4).
